# EUROPEAN PATENT SPECIFICATION

(11) **EP 3 615 182 B1**
(45) Date of publication and mention of the grant of the patent: **02.06.2021**
(21) Application number: 18722902.6
(22) Date of filing: 05.04.2018
(51) Int. Cl.: B01D 53/86

(54) **METHOD AND SYSTEM FOR THE REMOVAL OF NOXIOUS COMPOUNDS FROM FLUE-GAS USING AN SCR CATALYST**
VERFAHREN UND SYSTEM ZUR ENTFERNUNG VON SCHÄDLICHEN VERBINDUNGEN AUS RAUCHGASEN UNTER VERWENDUNG EINES SCR-KATALYSATORS
PROCÉDÉ ET SYSTÈME D'ÉLIMINATION DE COMPOSÉS NOCIFS D'UN GAZ DE COMBUSTION AU MOYEN D'UN CATALYSEUR DE RÉDUCTION CATALYTIQUE SÉLECTIVE (SCR)

(30) Priority: 26.04.2017 DK PA201700265
(43) Date of publication of application: 04.03.2020
(73) Proprietor: Haldor Topsøe A/S, 2800 Kgs. Lyngby (DK)
(72) Inventor: GABRIELSSON, Pär L. T., 25438 Helsingborg (SE)
(86) International application number: PCT/EP2018/058742
(87) International publication number: WO 2018/197175

(56) References cited:
- US-A1- 2011 041 481
- US-A1- 2011 200 505
- US-A1- 2013 149 225
- US-A1- 2015 336 051

## Description

The present invention relates to a method and system for reducing emission of nitrogen oxides (NOx) from off-gasses. In particular, the method and system of the invention provides an improved reduction of NOx during cold start of the engine.

Flue gases from different combustion facilities, e.g. boilers in solid or liquid fired power plants gas, oil-fired generators or cement kilns, biofuel fuelled combustion plants and waste incineration plants contain a number of environmentally problematic or even poisonous compounds. These comprise NOx.

Catalytic cleaning of flue gas reduces the amount of NOx and is therefore beneficial for the environment in general. In most areas, legislation requires reduction of NOx in the flue gas.

In Selective Catalytic Reduction (SCR) of NOx, nitrous oxide compounds are selectively reduced to harmless nitrogen and water by reaction with a reduction agent, e.g. ammonia, over a catalyst.

US 2015/336051 A1, US 2011/200505 A1, US 2013/149225 A1 and US 2011/041481 A1 all disclose exhaust gas cleaning methods for the reduction of nitrogen oxides by selective catalytic reduction (SCR).

In power plants typically a heat recovery unit steam generator unit (HRSG) is installed that recovers heat from a hot flue gas stream.

The HRSG unit comprises a superheater, an evaporator and an economizer.

In the superheater and evaporator, the heat in the flue gas is used to superheat steam and to preheat feed water before it is pumped to the boiler, which increases the boiler efficiency of the power plant. The flue gas temperature is thereby typically cooled to approximately 150°C.

The low temperature of the flue gas downstream the evaporator encounters a problem in the NOx removal by means of SCR.

The problem with the known SCR catalysts is the relatively low efficiency at flue gas temperatures below 250°C.

This usually means that the evaporator section of the HRSG will have to be split and the SCR placed in between the two sections.

The SCR catalyst is typically installed downstream the superheater and upstream the economizer.

It is known that the SCR reaction can be considerably accelerated, and the low temperature activity can be significantly raised at equimolar amounts of NO and NO₂ in the flue gas by the so-called "fast" SCR reaction:

2NH₃ + NO + NO₂ → 2N₂ + 3H₂O.

This invention is based on forming NO₂ externally to the flue gas duct and injecting the prepared NO₂ into the flue gas in an amount that promotes the fast SCR reaction. NO₂ can be formed from NH₃ by oxidation of the NH₃ to NO over a precious metal containing catalyst in a first step and subsequently oxidation of NO to NO₂ in a second step.

Thus, the invention provides in a first aspect a method for the removal of nitrogen oxides from flue gas from combustion facilities, comprising the steps of
passing the flue gas through a catalyst for selective reduction of nitrogen oxides in presence of ammonia added to the flue gas either as such or in form of a precursor thereof;
at a flue gas temperature of below 250°C further injecting an effluent gas containing nitrogen dioxide into the flue gas upstream the catalyst for selective reduction of nitrogen oxides;
providing the effluent gas containing nitrogen dioxide by steps of
catalytically oxidizing ammonia or a precursor thereof with an oxygen containing atmosphere to an effluent gas comprising nitrogen monoxide and oxygen in presence of an oxidation catalyst;
cooling the effluent gas to ambient temperature and oxidizing the nitrogen monoxide in the cooled effluent gas to nitrogen dioxide.

The problem with the known methods and systems is the relatively low efficiency of the SCR catalyst at flue gas temperatures below 250°C, as mentioned hereinbefore. This problem is solved by the invention with injection of NO₂ into the flue gas at the low temperatures to promote the "fast" SCR reaction. This reaction is responsible for the promotion of low temperature SCR.

At flue gas temperatures above 250°C, SCR catalysts have sufficient efficiency and injection of NO₂ into the flue gas can be disrupted when the gas temperature reaches 250°C.

A particular advantage of the invention is that tail end SCR installations (i.e. downstream the ecomonizer) are possible without the need of re-heat the gas to higher temperatures needed for reducing the catalyst volume.

Thus, a flue gas reheater unit, which is typically arranged upstream the SCR catalyst in the known flue gas cleaning systems can be omitted or much reduced in duty.

Ammonia oxidation to NO externally to the flue gas duct, is usually performed in a reactor with a noble metal catalyst, typically platinum or an alloy of platinum with other precious metals as minor components at reaction temperatures of between 250 and 800°C in presence of oxygen containing atmosphere.

To provide the required reaction temperature, the oxidation reactor can be heated by e.g. electrical heating or induction heating.

In an embodiment, the oxygen containing atmosphere includes hot recirculated gas which provides then additionally part of the oxidation reactor heating duty.

NO formed from NH₃ by oxidation of the NH₃ in contact with a precious metal containing catalyst in a first step, is subsequently oxidized to NO₂ in the NO containing effluent gas from the first step by cooling the gas to ambient temperature to push the equilibrium reaction 2NO+O₂⇄2NO₂ towards formation of NO₂ in the above reaction scheme.

The term "ambient temperature" as used herein, shall mean any temperature prevailing in the surroundings of a combustion facility employing the method and system of the invention. Typically, the ambient temperature will be between -20°C and 40°C.

Cooling and oxidation of the NO containing effluent gas can be performed in an aging reactor sized so that the residence time of the gas is about 1 minute or longer.

In an embodiment the oxidation reaction is performed in presence of a catalyst promoting the oxidation of NO to NO₂. Those catalysts are known in the art and include Pt on TiO₂, Pt on SiO₂ and activated carbon or Pt and/or Pd on alumina.

As mentioned hereinbefore the desired fast SCR reaction requires equal amounts of NO and NO₂. Consequently, the amount of NO₂ injected into the flue gas at cold start conditions with a temperature below 250°C is controlled to result in 45 to 55% by volume of the nitrogen oxides content in the flue gas is NO₂ at inlet to the SCR catalyst unit.

In a further aspect, the invention provides a system for use in the method according to the invention.

The system comprises within a flue gas duct a catalyst for selective reduction of nitrogen oxides;
upstream the catalyst for selective reduction of nitrogen oxides, injection means for injection of ammonia or a urea solution into the flue gas duct;
upstream the catalyst for selective reduction of nitrogen oxides, injection means for injection of nitrogen dioxide containing effluent gas; and
outside the flue gas duct,
an ammonia oxidation catalyst; and
means for cooling and oxidizing nitrogen monoxide from the ammonia oxidation catalyst to nitrogen dioxide containing effluent gas connected at its outlet end to the injection means for injection of nitrogen dioxide containing effluent gas.

As mentioned above, the oxidation reaction of NO to NO₂ needs a residence time of the NO containing gas of at least 1 minute. Typically, 1-2 minutes.

This can be achieved in a heat exchanger either gas cooled or water cooled or alternatively when shaping the cooling and oxidizing means as a spirally wound tube with a length resulting in the desired residence time of the gas passing through the tube.

In another embodiment, the means for cooling and oxidizing nitrogen monoxide containing effluent gas is provided with an oxidation catalyst is provided with an oxidation catalyst promoting the oxidation of NO to NO₂.

## Claims

1. A method for the removal of nitrogen oxides from flue gas from combustion facilities, comprising the steps of
passing the flue gas through a catalyst for selective reduction of nitrogen oxides in presence of ammonia added to the flue gas either as such or in form of a precursor thereof;
at a flue gas temperature below 250°C injecting an effluent gas containing nitrogen dioxide into the flue gas upstream the catalyst for selective reduction of nitrogen oxides;
providing the effluent gas containing nitrogen dioxide by steps of
catalytically oxidizing ammonia or a precursor thereof with an oxygen containing atmosphere to an effluent gas containing nitrogen monoxide and oxygen in presence of an oxidation catalyst;
cooling the effluent gas to ambient temperature between -20 and 40 °C and oxidizing the nitrogen monoxide in the cooled effluent gas to the nitrogen dioxide containing effluent gas.

2. The method of claim 1, wherein the oxygen containing atmosphere comprises flue gas.

3. The method of claim 1, wherein the oxygen atmosphere is ambient air.

4. The method according to any one of claims 1 to 3, wherein the nitrogen dioxide containing effluent gas is injected into the flue gas in an amount resulting in 45 to 55% by volume of the nitrogen oxides is nitrogen dioxide at inlet to the catalyst for selective reduction of nitrogen oxides.

5. The method according to any one of claims 1 to 4, wherein the oxidation of the nitrogen monoxide in the cooled effluent gas to the nitrogen dioxide containing effluent gas is performed in presence of an oxidation catalyst.

6. System for use in the method according to any one of claims 1 to 5, comprising within a flue gas duct a catalyst for selective reduction of nitrogen oxides; upstream the catalyst for selective reduction of nitrogen oxides, injection means for injection of ammonia or a urea solution into the flue gas duct;
upstream the catalyst for selective reduction of nitrogen oxides, injection means for injection of nitrogen dioxide containing effluent gas; and
outside the flue gas duct,
an ammonia oxidation catalyst; and
means for cooling and oxidizing nitrogen monoxide containing effluent gas withdrawn from the ammonia oxidation catalyst to the nitrogen dioxide containing effluent gas connected at its outlet end to the injection means for injection of the nitrogen dioxide containing effluent gas.

7. The system of claim 6, wherein the means for cooling and oxidizing the nitrogen monoxide containing effluent gas is in form of a heat exchanger.

8. The system of claim 6, wherein the means for cooling and oxidizing the nitrogen monoxide containing effluent gas is in form of a spirally wound tube.

9. The system of any one of claims 6 to 8, wherein the means for the cooling and oxidizing nitrogen monoxide containing effluent gas is provided with an oxidation catalyst.

## Patentansprüche

1. Verfahren zur Entfernung von Stickoxiden aus Rauchgas aus Verbrennungsanlagen, umfassend die Schritte
Leiten des Rauchgases durch einen Katalysator zur selektiven Reduktion von Stickoxiden in Gegenwart von Ammoniak, das dem Rauchgas entweder als solches oder in Form eines Vorläufers davon zugesetzt wird; Injizieren eines Stickstoffdioxid enthaltenden Abgases bei einer Rauchgastemperatur unter 250 °C in das Rauchgas stromaufwärts des Katalysators zur selektiven Reduktion von Stickoxiden;
Bereitstellen des Stickstoffdioxid enthaltenden Abgases durch die Schritte katalytisches Oxidieren von Ammoniak oder eines Vorläufers davon mit einer sauerstoffhaltigen Atmosphäre in Gegenwart eines Oxidationskatalysators zu einem Abgas, das Stickstoffmonoxid und Sauerstoff enthält;
Abkühlen des Abgases auf eine Umgebungstemperatur von -20 bis 40 °C, und Oxidieren des Stickstoffmonoxids in dem gekühlten Abgas zu dem Stickstoffdioxid enthaltenden Abgas.

2. Verfahren gemäß Anspruch 1, wobei die sauerstoffhaltige Atmosphäre Rauchgas umfasst.

3. Verfahren gemäß Anspruch 1, wobei die sauerstoffhaltige Atmosphäre Umgebungsluft ist.

4. Verfahren gemäß einem der Ansprüche 1 bis 3, wobei das Stickstoffdioxid enthaltende Abgas in einer solchen Menge in das Rauchgas injiziert wird, dass an dem Einlass zum Katalysator zur selektiven Reduktion von Stickoxiden 45 bis 55 Vol .-% der Stickoxide Stickstoffdioxid sind.

5. Verfahren gemäß einem der Ansprüche 1 bis 4, wobei die Oxidation des Stickstoffmonoxids in dem abgekühlten Abgas zu dem Stickstoffdioxid enthaltenden Abgas in Gegenwart eines Oxidationskatalysators durchgeführt wird.

6. System zur Verwendung in dem Verfahren gemäß einem der Ansprüche 1 bis 5, umfassend innerhalb eines Rauchgaskanals einen Katalysator zur selektiven Reduktion von Stickoxiden;
Injektionsmittel zum Injizieren von Ammoniak oder einer Harnstofflösung in den Rauchgaskanal stromaufwärts des Katalysators zur selektiven Reduktion von Stickoxiden;
Injektionsmittel zum Injizieren von Stickstoffdioxid enthaltendem Abgas stromaufwärts des Katalysators zur selektiven Reduktion von Stickoxiden; und außerhalb des Rauchgaskanals
einen Ammoniakoxidationskatalysator; und
Mittel zum Kühlen und Oxidieren von Stickstoffmonoxid enthaltendem Abgas, das aus dem Ammoniakoxidationskatalysator abgezogen wird, um das Stickstoffdioxid enthaltende Abgas zu bilden, das an seinem Auslassende mit den Injektionsmitteln zum Injizieren des Stickstoffdioxid enthaltenden Abgases verbunden ist.

7. System gemäß Anspruch 6, wobei das Mittel zum Kühlen und Oxidieren des Stickstoffmonoxid enthaltenden Abgases in Form eines Wärmetauschers vorliegt.

8. System gemäß Anspruch 6, wobei das Mittel zum Kühlen und Oxidieren des Stickstoffmonoxid enthaltenden Abgases in Form eines spiralförmig gewickelten Rohres vorliegt.

9. System gemäß einem der Ansprüche 6 bis 8, wobei das Mittel zum Kühlen und Oxidieren von Stickstoffmonoxid enthaltendem Abgas mit einem Oxidationskatalysator versehen ist.

## Revendications

1. Procédé d'élimination d'oxydes d'azote de gaz de combustion d'installations de combustion, comprenant les étapes de
passage des gaz de combustion à travers un catalyseur pour la réduction sélective des oxydes d'azote en présence d'ammoniac ajouté aux gaz de combustion soit en tant que tel soit sous la forme d'un précurseur de celui-ci;
à une température des gaz de combustion inférieure à 250 °C, injection d'un effluent gazeux contenant du dioxyde d'azote dans les gaz de combustion en amont du catalyseur pour une réduction sélective des oxydes d'azote;
fourniture de l'effluent gazeux contenant du dioxyde d'azote par des étapes
d' oxydation catalytique d'ammoniac ou d'un précurseur de celui-ci avec une atmosphère contenant de l'oxygène en un effluent gazeux contenant du monoxyde d'azote et de l'oxygène en présence d'un catalyseur d'oxydation;
refroidissement de l'effluent gazeux à une température ambiante de -20 à 40 °C et oxydation du monoxyde d'azote dans l'effluent gazeux refroidi en l'effluent gazeux contenant du dioxyde d'azote.

2. Procédé selon la revendication 1, dans lequel l'atmosphère contenant de l'oxygène comprend des gaz de combustion.

3. Procédé selon la revendication 1, dans lequel l'atmosphère d'oxygène est l'air ambiant.

4. Procédé selon l'une des revendications 1 à 3, dans lequel l'effluent gazeux contenant du dioxyde d'azote est injecté dans les gaz de combustion en une quantité résultant en ce que 45 à 55 % en volume des oxydes d'azote sont du dioxyde d'azote à l'entrée du catalyseur pour la réduction sélective des oxydes d'azote.

5. Procédé selon l'une des revendications 1 à 4, dans lequel l'oxydation du monoxyde d'azote dans l'effluent gazeux refroidi en l'effluent gazeux contenant du dioxyde d'azote est effectuée en présence d'un catalyseur d'oxydation.

6. Système pour une utilisation dans le procédé selon l'une des revendications 1 à 5, comprenant à l'intérieur d'un conduit de gaz de combustion un catalyseur de réduction sélective des oxydes d'azote; en amont du catalyseur de réduction sélective des oxydes d'azote, un moyen d'injection pour l'injection d'ammoniac ou d'une solution d'urée dans le conduit de gaz de combustion;
en amont du catalyseur de réduction sélective des oxydes d'azote, un moyen d'injection pour l'injection d'effluent gazeux contenant du dioxyde d'azote; et
à l'extérieur du conduit de gaz de combustion,
un catalyseur d'oxydation d'ammoniac; et
un moyen pour refroidir et oxyder l'effluent gazeux contenant du monoxyde d'azote retiré du catalyseur d'oxydation d'ammoniac en l'effluent gazeux contenant du dioxyde d'azote relié au niveau de son extrémité de sortie au moyen d'injection pour l'injection de l'effluent gazeux contenant du dioxyde d'azote.

7. Système selon la revendication 6, dans lequel le moyen pour refroidir et oxyder l'effluent gazeux contenant du monoxyde d'azote est sous la forme d'un échangeur de chaleur.

8. Système selon la revendication 6, dans lequel le moyen pour refroidir et oxyder l'effluent gazeux contenant du monoxyde d'azote est sous la forme d'un tube enroulé en spirale.

9. Système selon l'une des revendications 6 à 8, dans lequel le moyen pour le refroidissement et l'oxydation de l'effluent gazeux contenant du monoxyde d'azote est pourvu d'un catalyseur d'oxydation.
